# EUROPEAN PATENT APPLICATION

(11) **EP 3 425 073 A1**
(43) Date of publication of application: **09.01.2019**
(21) Application number: 16892722.6
(22) Date of filing: 07.12.2016
(51) Int. Cl.: C22C 1/10, C01B 32/15, C01B 32/18, C01B 32/182

(54) **METHOD FOR PRODUCING CARBON COMPOSITE MATERIAL, AND CARBON COMPOSITE MATERIAL**

(30) Priority: 04.03.2016 JP 2016041915
(71) Applicant: Tohoku Techno Arch Co., Ltd., Sendai-shi, Miyagi 980-0845 (JP); TPR Industry Co., Ltd., Sagae-shi, Yamagata 990-0561 (JP)
(72) Inventor: KATO Hidemi, Sendai-shi Miyagi 980-8577 (JP); TSUDA Masashi, Sendai-shi Miyagi 980-8577 (JP); TAKANO Yugo, Sagae-shi Yamagata 990-0561 (JP); SUZUKI Yosuke, Sagae-shi Yamagata 990-0561 (JP); CHINO Tsutomu, Sagae-shi Yamagata 990-0561 (JP); KAMATA Koji, Sagae-shi Yamagata 990-0561 (JP); MURONAKA Shota, Nagoya-shi Aichi 467-8562 (JP)
(74) Representative: Winter, Brandl, Fürniss, Hübner, Röss, Kaiser, Polte - Partnerschaft mbB
(86) International application number: PCT/JP2016/086358
(87) International publication number: WO 2017/149887

(57) **Abstract**

A novel method for producing a carbon composite material which makes it possible to reduce costs; and a carbon composite material are provided. The method includes a dealloying step of immersing a carbon-containing material 11 composed of a compound, alloy or non-equilibrium alloy containing carbon in a metal bath 12, the metal bath having a solidification point that is lower than a melting point of the carbon-containing material 11, the metal bath being controlled to a lower temperature than a minimum value of a liquidus temperature within a compositional fluctuation range extending from the carbon-containing material 11 to carbon by decreasing other non-carbon main components, to thereby selectively elute the other non-carbon main components into the metal bath 12 to form a carbon member having microvoids; and a cooling step performed with the microvoids of the carbon member including a component of the metal bath 12 to solidify the metal bath 12 component. The carbon composite material combining carbon with the metal bath 12 component that has solidified is thereby obtained

## Description

### Field of the Invention

The present invention relates to methods for producing carbon composite materials and carbon composite materials.

### Description of Related Art

Composite materials combining carbon with a metal, due to their good properties including electrical conductivity, heat conductivity and durability, are applied to various uses such as electrical contact materials for batteries and circuit blocking devices and slide collecting materials for pantograph sliders.

Conventional methods for producing composite materials combing carbon with a metal include: for example, a method in which carbon, a binder and a metal are kneaded and crushed, the crushed product is molded into an article, and the article is heat-treated at 1300°C or higher (see, for example, Patent Literature 1); and a method in which a carbon material having pores with a pore diameter of 10 nm or less is immersed in a reaction solution having a fluoride complex of silicon or tin, and the carbon material is allowed to support at least one kind of metalloid oxide selected from the group consisting of silicon monoxide, silicon dioxide, tin monoxide and tin dioxide (see, for example, Patent Literature 2).

On the other hand, the present inventors have already developed a so-called dealloying using metallic melt method capable of producing metal members with micropores on their surface or in their entirety (see, for example, Patent Literature 3). Citation List

Patent Literature 1: JP-A-2012-25632
Patent Literature 2: JP-A-2011-71063
Patent Literature 3: WO 2011/092909

### Summary of Invention

The method described in Patent Literature 1 for producing a carbon composite material requires the heat treatment to be performed at a high temperature that is 1300°C or higher, posing a problem in terms of increased production cost. The method described in Patent Literature 2 for producing a carbon composite material requires carbon materials having pores to be produced or purchased in advance, posing a problem in terms of increased material costs.

The present invention has focused on those problems and has been made. It is an object of the present invention to provide a novel method for producing a carbon composite material which makes it possible to reduce costs; and a carbon composite material.

To attain the above object, the method according to the present invention for producing a carbon composite material includes a dealloying step of bringing a carbon-containing material composed of a compound, alloy or non-equilibrium alloy containing carbon into contact with a molten metal, the molten metal having a solidification point that is lower than a melting point of the carbon-containing material, the molten metal being controlled to a lower temperature than a minimum value of a liquidus temperature within a compositional fluctuation range extending from the carbon-containing material to carbon by decreasing other non-carbon main components, to thereby selectively elute the other non-carbon main components into the molten metal to form microvoids and allow the molten metal to penetrate the microvoids; and a cooling step performed with the microvoids including the molten metal to solidify the molten metal.

In the method according to the present invention for producing a carbon composite material, the dealloying step that involves selectively eluting the other non-carbon main components from the carbon-containing material into the molten metal causes the repeated bonding between residual carbons, resulting in forming particles with a nanometer dimension. In addition, this step causes those particles to partially bond to one another, consequently giving porous bulk carbon material having microvoids such as meso pores (diameter: 2 nm to 60 nm) and macro pores (diameter: 60 nm or more). The contact with the molten metal that is kept at this state enables the molten metal to penetrate the microvoids of the carbon member. Cooling to be performed in the cooling step with the microvoids including the molten metal to solidify the molten metal results in giving a carbon composite material combining carbon with the molten metal component that has solidified.

The method according to the present invention for producing a carbon composite material, which utilizes a so-called dealloying using metallic melt method, is an entirely novel method that has hitherto not been existent for producing a carbon composite material. In the method according to the present invention for producing a carbon composite material, the regulation of a temperature of a molten metal suffices in order to produce the carbon composite material with relative ease at a low cost. In the method according to the present invention for producing a carbon composite material, making changes in a temperature of a molten metal, duration of contacting a carbon-containing material with a molten metal, and a carbon component proportion within a carbon-containing material, can make a difference in a size of carbon and a solidified molten metal component and a composite state in a target carbon composite material.

In the method according to the present invention for producing a carbon composite material, as long as it is possible in the dealloying step for the other non-carbon main components of the carbon-containing material to be eluted into the molten metal, the carbon-containing material may be brought into contact with the molten metal in any manner. For instance, a possible way of the dealloying step is that the carbon-containing material is immersed in a metal bath composed of the molten metal to thereby selectively elute the other non-carbon main components into the metal bath. Another possible way is that a pretreatment step is performed in which a solid metal having a solidification point that is lower than a melting point of the carbon-containing material is arranged so as to contact the carbon-containing material, and thereafter the dealloying step is performed in which the solid metal is heated and turned into the molten metal to thereby selectively elute the other non-carbon main components into the molten metal.

In the method according to the present invention for producing a carbon composite material, cooling to be performed in the cooling step may be done with the porous carbon member contacting the molten metal. In the case of the molten metal being composed of the metal bath, the porous carbon member which is being immersed in the metal bath may be cooled. By cooling in this way, a carbon composite material in which microvoids of the carbon member are packed with the molten metal (metal bath) component that has solidified is obtainable. Periphery parts of the carbon composite material that have the solidified molten metal (metal bath) alone can be removed as needed.

In the method according to the present invention for producing a carbon composite material, another possible way is releasing the porous carbon member from the molten metal that is followed by cooling in the cooling step performed with the microvoids including the molten metal. In the case of the molten metal being composed of a metal bath, a possible way is pulling up the porous carbon member from the metal bath that is followed by cooling.

In the method according to the present invention for producing a carbon composite material, it is preferred that the molten metal is composed of Ag, Bi, Cu, Ga, Ge, Hg, In, Ir, Pb, Pt, Rh, Sb, Sn, or Zn, or is composed of a mixture that is an alloy of at least one of those components as a main component, and that the other non-carbon main components are composed of any one or a mixture including more than one of Al, B, Be, Ca, Ce, Cr, Dy, Er, Eu, Fe, Gd, Hf, Ho, K, La, Li, Lu, Mg, Mn, Mo, Na, Nb, Nd, Pr, Sc, Se, Si, Sm, Sr, Ta, Ti, V, W and Zr. In this case, the carbon composite material is producible with particular efficiency.

In the method according to the present invention for producing a carbon composite material, it is preferred that the dealloying step is performed in an inert atmosphere or a vacuum atmosphere, or performed in air with flux added to the molten metal. The dealloying step in this way prevents the oxidization of the molten metal.

The carbon composite material according to the present invention includes carbon and Ag, Bi, Cu, Ga, Ge, Hg, In, Ir, Pb, Pt, Rh, Sb, Sn or Zn, or an alloy including at least one of those components as a main component. Particularly, the inclusion of carbon with Ag, Cu or Zn is preferred.

Preferably, the carbon composite material according to the present invention is produced particularly by the method according to the present invention for producing a carbon composite material. The carbon composite material according to the present invention is applicable to various uses by taking advantage of properties of a component combined with carbon. For instance, a composite material combining C with Ag is suitably useable as an electrical contact material; and a composite material combining C with Cu is suitably useable as a slide collecting material and as an electrical contact material.

The present invention provides a novel method for producing a carbon composite material which makes it possible to reduce costs; and also provides a carbon composite material.

### Brief Description of Drawings

FIG. 1 illustrates a Mn-C phase diagram.
FIG. 2 is a schematic perspective view illustrating a dealloying step in a method in an embodiment of the present invention for producing a carbon composite material.
FIG. 3 is a scanning electron microscopic photograph showing a carbon composite material obtained by a method in an embodiment of the present invention for producing a carbon composite material.

### Detailed Description of the Invention

Embodiments of the present invention will be described with reference to examples hereinafter.

The method in an embodiment of the present invention for producing a carbon composite material includes subjecting a precursor that is a carbon-containing material to a dealloying step and a cooling step, resulting in giving a carbon composite material provided in an embodiment of the present invention.

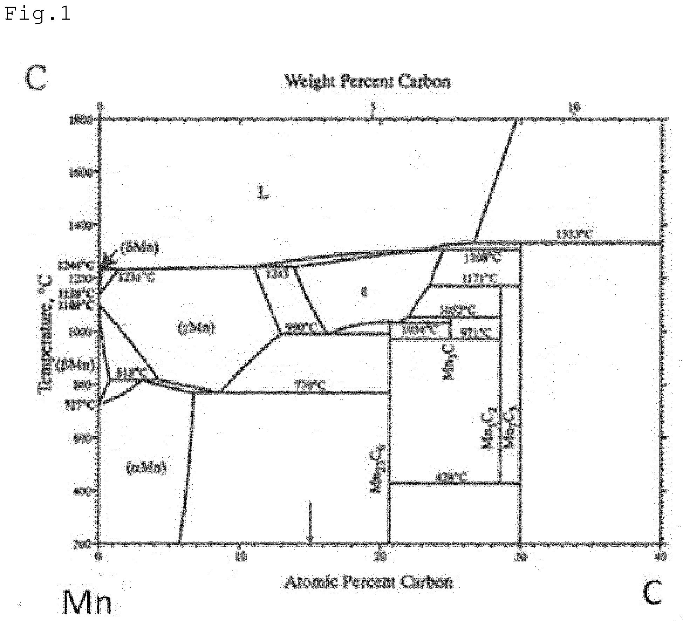

A first thing to do in the method in an embodiment of the present invention for producing a carbon composite material is the preparation of a precursor composed of a compound, alloy or non-equilibrium alloy containing carbon and other non-carbon main components, serving as a carbon-containing material. For instance, reference is made to a Mn-C phase diagram shown in FIG. 1 to prepare a Mn-C precursor alloy where the components other than carbon are Mn. In view of the general tendency of Mn and a melt of its alloy being readily oxidizable, the melting is done preferably in an inert atmosphere such as argon.

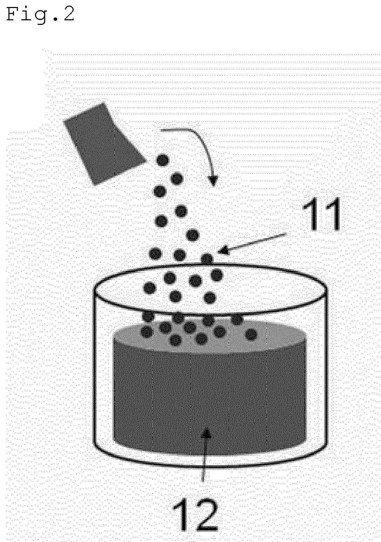

Subsequently, as shown in FIG. 2, the precursor that is the carbon-containing material 11 prepared is formed to be powdery or sheet-shaped to have an enhanced reactivity, and then is immersed for a prescribed amount of time in a metal bath 12 having a solidification point that is lower than a melting point of the carbon-containing material 11. At this time, the metal bath 12 is controlled to a lower temperature than a minimum value of a liquidus temperature within a compositional fluctuation range extending from the carbon-containing material 11 to carbon by decreasing other non-carbon main components. For example, in the case of the carbon-containing material 11 that is a Mn-C precursor alloy, the metal bath 12 is controlled to a lower temperature than a minimum value of a liquidus temperature, 1231°C, in a compositional fluctuation range extending to C by decreasing Mn, as determined from the phase diagram shown in FIG. 1. In the case of the metal bath 12 that is a Bi melt, it is preferred that the metal bath 12 is at 600°C or higher in view of the reaction unlikely to taking place at a temperature at 600°C or below.

The duration of the immersion in the metal bath 12 varies depending on components of the metal bath 12 and of the precursor serving as the carbon-containing material 11, but is around between 5 to 10 minutes, for example in the use of the metal bath 12 that is a Bi melt or an Ag melt into which the carbon-containing material 11 that is a Mn-C precursor is immersed. In the use of the metal bath 12 that is a Bi melt into which the carbon-containing material 11 that is a Mn-C precursor is immersed, which case involves the floating of the powdery Mn-C precursor on the surface of the melt due to density difference, it is preferred during the immersion to stir the precursor and the melt by using, e.g., a rod. In view of the general tendency of Bi and a melt of its alloy being readily oxidizable, performing the dealloying step involving the use of the metal bath 12 is done preferably in an inert atmosphere such as argon or in a vacuum atmosphere.

The immersion into the metal bath 12 causes the other non-carbon main components (e.g., Mn) to be selectively eluted from the carbon-containing material 11 into the metal bath 12. This operation leads to the repeated bonding between carbons remaining in the metal bath 12, resulting in forming particles with a nanometer dimension. In addition, this operation causes those particles to partially bond to one another, consequently giving a porous bulk carbon material having microvoids such as meso pores (diameter: 2 nm to 60 nm) and macro pores (diameter: 60 nm or more). The immersion in the metal bath 12 that is kept at this state enables the metal bath 12 component to penetrate the microvoids of the carbon member. The cooling to be performed with the microvoids including the metal bath 12 component to solidify the metal bath 12 component results in giving a carbon composite material combining carbon with the metal bath 12 component that has solidified.

The cooling may be performed with the porous carbon member being immersed in the metal bath 12, or may be performed after the porous carbon member is pulled up from the metal bath 12. In the case of the cooling to be performed with the porous carbon member being immersed in the metal bath 12, a carbon composite material in which microvoids of the carbon member are packed with the metal bath 12 component that has solidified is obtainable. Periphery parts of the carbon composite material that have the solidified metal bath 12 component alone can be removed as needed.

### Example 1

A carbon-containing material 11 was MnC (Mn:C=85:15 atom%) with a particle diameter of 20 to 40 µm. A metal bath 12 was a Bi melt at 900°C. First, Bi having a purity of 99.99% (manufactured by Wako Pure Chemical Industries, Ltd.) weighing 300 g was introduced into a graphite crucible. The graphite crucible was inserted into a coil inside a high-frequency melting furnace ("VMF-I-I0.5 special-type" manufactured by DIAVAC LIMITED). The inside of the high-frequency melting furnace was reduced to around 5 × 10⁻³ Pa. An argon gas was flowed in to increase the pressure inside the furnace to around 80 kPa, followed by heating.

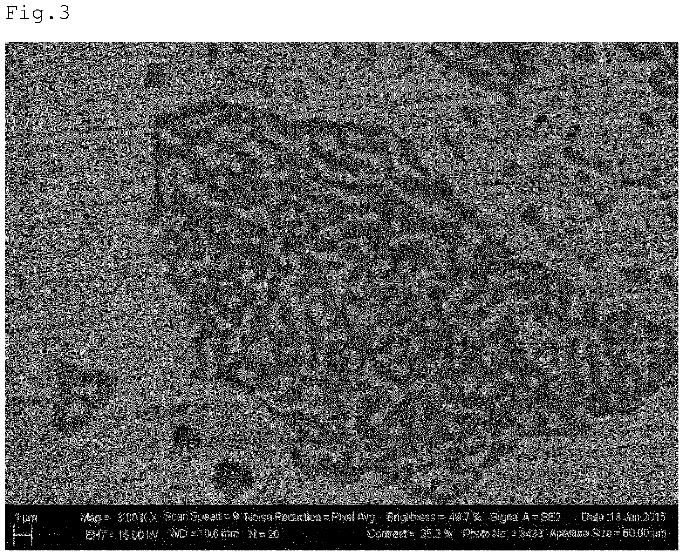

The heating to 900°C melted Bi. Thereafter, 30 g of the MnC serving as the carbon-containing material 11 was introduced into a Bi metal bath 12. The MnC was held in the metal bath 12 for 15 minutes, and thereafter allowed to cool. A carbon composite material combining C with Bi was thus obtained. A microscopic photograph of the carbon composite material obtained in this way is shown in FIG. 3. FIG. 3 shows the obtainment of the carbon composite material with a particle diameter of 20 to 40 µm that was present in Bi.

### Example 2

A carbon-containing material 11 was MnC (Mn:C=85:15 atom%) with a particle diameter of 20 to 40 µm. A metal bath 12 was an Ag melt at 1100°C. First, Ag having a purity of 99.99% (ISHIFUKU Metal Industry Co., Ltd.) weighing 300 g was introduced into a graphite crucible. The graphite crucible was inserted into a coil inside a high-frequency melting furnace ("VMF-I-I0.5 special grade" manufactured by DIAVAC LIMITED). The inside of the high-frequency melting furnace was reduced to around 5 × 10⁻³ Pa. An argon gas was flowed in to increase the pressure inside the furnace to around 80 kPa, followed by heating.

The heating to 1100°C melted Ag. Thereafter, 10 g of the MnC serving as the carbon-containing material 11 was introduced into an Ag metal bath 12. The MnC was held in the metal bath 12 for 15 minutes, and thereafter allowed to cool. A carbon composite material combining C with Ag was thus obtained.

As described above, the method according to an embodiment of the present invention for producing a carbon composite material, which utilizes a so-called dealloying using metallic melt method, is an entirely novel method that has hitherto not been existent for producing a carbon composite material. In the method according to an embodiment of the present invention for producing a carbon composite material, the regulation of a temperature of a molten metal suffices in order to produce the carbon composite material with relative ease at a low cost.

In the method according to an embodiment of the present invention for producing a carbon composite material, the selectively eluting the other non-carbon main components into the metal bath is not limited to be by way of the immersing the carbon-containing material in the metal bath, but may be by way of arranging a solid metal having a solidification point that is lower than a melting point of the carbon-containing material so as to contact the carbon-containing material and thereafter heating the solid metal to turn the solid metal into the molten metal. In the method, by the cooling performed with the microvoids of the formed carbon member including the molten metal component, a carbon composite material combining carbon with the molten metal component that has solidified is obtainable.

In the method according to an embodiment of the present invention for producing a carbon composite material, the metal bath 12 is not limited to Bi, but may be Ag, Cu, Ga, Ge, Hg, In, Ir, Pb, Pt, Rh, Sb, Sn or Zn, or may be composed of a mixture that is an alloy of at least one of those components as a main component; and the other non-carbon main components of the precursor that is the carbon-containing material 11 are not limited to Mn, but may be composed of any one or a mixture including more than one of Al, B, Be, Ca, Ce, Cr, Dy, Er, Eu, Fe, Gd, Hf, Ho, K, La, Li, Lu, Mg, Mo, Na, Nb, Nd, Pr, Sc, Se, Si, Sm, Sr, Ta, Ti, V, W and Zr.

For instance, consideration of metal baths (melts) 12 suited in the dealloying step for representative carbon-containing materials (carbides) 11 are thought to provide such results as indicated in Table 1. Table 1 indicates the results of the considerations based on respective two-dimensional phase diagrams.

**Table 1**

| Precursor | Melting point (°C) | Melt |
|---|---|---|
| B₄C | 3500 | Cu |
| Al₄C₃ | 2100 | Cu, Zn, Ag, Sn, Pb, Bi |
| SiC | 2730 | Cu, Ag, |
| CaC₂ | 2300 | Cu, Zn, Ag, Pb, Bi |
| TiC | 3170 | Cu, Zn, Ag, Sn, Pb, Bi |
| Fe₃C metastable phase | 1250 | Sn |

### Reference Signs List

11: Carbon-containing material
12: Metal bath
13: Carbon member

## Claims

1. A method for producing a carbon composite material comprising a dealloying step of bringing a carbon-containing material composed of a compound, alloy or non-equilibrium alloy containing carbon into contact with a molten metal, the molten metal having a solidification point that is lower than a melting point of the carbon-containing material, the molten metal being controlled to a lower temperature than a minimum value of a liquidus temperature within a compositional fluctuation range extending from the carbon-containing material to carbon by decreasing other non-carbon main components, to thereby selectively elute the other non-carbon main components into the molten metal to form microvoids and allow the molten metal to penetrate the microvoids; and a cooling step performed with the microvoids including the molten metal to solidify the molten metal.

2. The method according to claim 1 for producing a carbon composite material, wherein the dealloying step is immersing the carbon-containing material into a metal bath composed of the molten metal thereby selectively eluting the other non-carbon main components into the metal bath.

3. The method according to claim 1 for producing a carbon composite material, comprising a pretreatment step of arranging a solid metal having a solidification point that is lower than a melting point of the carbon-containing material so as to contact the carbon-containing material, the pretreatment step followed by the dealloying step through heating the solid metal to turn the solid metal into the molten metal for selectively eluting the other non-carbon main components into the molten metal.

4. The method according to any one of claims 1 to 3 for producing a carbon composite material, wherein the molten metal is composed of Ag, Bi, Cu, Ga, Ge, Hg, In, Ir, Pb, Pt, Rh, Sb, Sn, or Zn, or is composed of a mixture that is an alloy of at least one of those components as a main component, and wherein the other non-carbon main components are composed of any one or a mixture including more than one of Al, B, Be, Ca, Ce, Cr, Dy, Er, Eu, Fe, Gd, Hf, Ho, K, La, Li, Lu, Mg, Mn, Mo, Na, Nb, Nd, Pr, Sc, Se, Si, Sm, Sr, Ta, Ti, V, W and Zr.

5. The method according to any one of claims 1 to 4 for producing a carbon composite material, wherein the dealloying step is performed in an inert atmosphere or a vacuum atmosphere, or performed in air with flux added to the molten metal.

6. A carbon composite material comprising carbon and Ag, Bi, Cu, Ga, Ge, Hg, In, Ir, Pb, Pt, Rh, Sb, Sn or Zn, or an alloy including at least one of those components as a main component.

7. A carbon composite material comprising carbon and Ag, Cu or Zn.
